# DEMANDE DE BREVET EUROPEEN

(11) **EP 3 792 773 A1**
(43) Date de publication de la demande: **17.03.2021**
(21) Numéro de dépôt: 20195324.7
(22) Date de dépôt: 09.09.2020
(51) Int. Cl.: G06F 12/14, G06F 9/48, G06F 21/74

(54) **SYSTÈME DE PROTECTION DE LA MÉMOIRE**

(30) Priorité: 12.09.2019 FR 1910065
(71) Demandeur: STMicroelectronics (Grand Ouest) SAS, 72100 Le Mans (FR)
(72) Inventeur: JAOUEN, Michel, 72530 YVRE L'EVEQUE (FR)
(74) Mandataire: Cabinet Beaumont

(57) **Abrégé**

La présente description concerne un système de protection d'une mémoire comprenant un logiciel de sécurité (HANDLER) configuré pour déterminer, à partir d'une exception générée lors d'une tentative d'action non autorisée dans la mémoire (102), si le logiciel de sécurité peut effectuer l'action.

## Description

### Domaine technique

La présente description concerne de façon générale les systèmes de protection de la mémoire.

### Technique antérieure

La sécurité est un enjeu majeur pour les entreprises dans le domaine de l'informatique ou de l'électronique ainsi que pour l'ensemble des acteurs qui l'entourent. En particulier, la sécurité des mémoires des appareils électroniques, et donc des informations, est particulièrement importante.

En informatique, la protection de la mémoire est généralement effectuée par un ensemble de systèmes mis en œuvre au niveau matériel et logiciel pour qu'un processus ne puisse pas accéder à la mémoire utilisée par un autre processus ou ne puisse pas accéder à des informations protégées.

### Résumé de l'invention

Un mode de réalisation pallie tout ou partie des inconvénients des systèmes de protection de la mémoire connus.

Un mode de réalisation prévoit un système de protection d'une mémoire comprenant un logiciel de sécurité configuré pour déterminer, à partir d'une exception générée lors d'une tentative d'action non autorisée dans la mémoire, si le logiciel de sécurité peut effectuer l'action.

Selon un mode de réalisation, la tentative d'action est effectuée par un autre logiciel.

Selon un mode de réalisation, le logiciel de sécurité est configuré pour obtenir des caractéristiques de l'action à partir de l'exception générée.

Selon un mode de réalisation, au moins certaines des caractéristiques obtenues sont comprises parmi : l'adresse de la mémoire visée par la tentative d'action, l'identification du logiciel tentant d'agir dans la mémoire, l'action que l'autre logiciel cherche à effectuer, le code opérateur de l'action, des registres de l'action.

Selon un mode de réalisation, le logiciel de sécurité est configuré pour comparer les caractéristiques de l'action obtenues à des informations représentatives des actions pouvant être effectuées dans une mémoire.

Selon un mode de réalisation, les informations programmées ne sont accessibles qu'au logiciel de sécurité.

Selon un mode de réalisation, le système comprend une unité de protection de la mémoire configurée pour définir des régions dans la mémoire et pour attribuer aux régions des niveaux de protection.

Selon un mode de réalisation, l'exception est générée par l'unité de protection de la mémoire.

Un autre mode de réalisation prévoit un procédé d'utilisation d'un système de protection d'une mémoire, comprenant les étapes : générer une exception lors d'une tentative d'action non autorisée dans la mémoire ; et déterminer, par un logiciel de sécurité, à partir de l'exception, si le logiciel de sécurité est autorisé à effectuer l'action.

Selon un mode de réalisation, le procédé comprend une étape de décryptage de l'exception, de manière à obtenir des caractéristiques de l'action.

Selon un mode de réalisation, le procédé comprend une étape au cours de laquelle le logiciel de sécurité effectue l'action.

Selon un mode de réalisation, l'autre logiciel continue ensuite son exécution.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre un mode de réalisation d'un système de protection de la mémoire ; et
la figure 2 représente un exemple de procédé d'utilisation du mode de réalisation de système de protection de la mémoire de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, l'appareil comprenant le système de protection de la mémoire ne sera pas détaillé.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

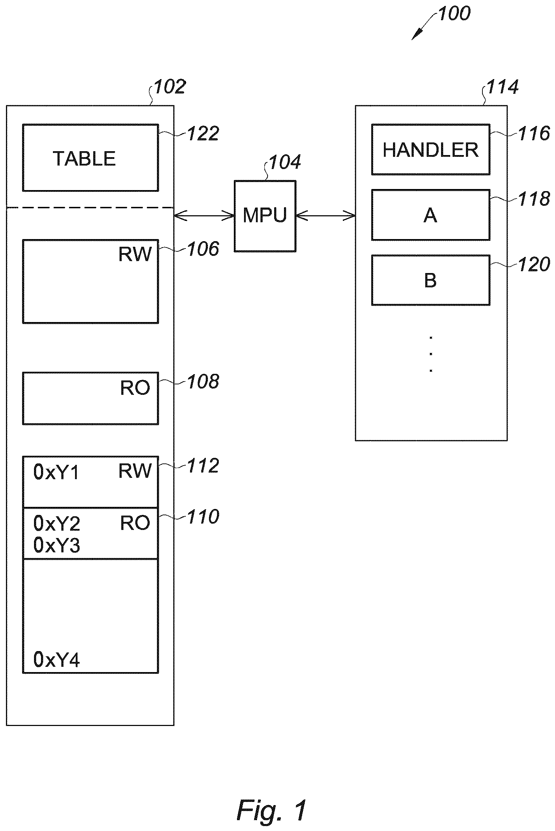

La figure 1 illustre un mode de réalisation d'un système 100 de protection de la mémoire.

Le système fait par exemple partie d'un appareil électronique tel qu'un ordinateur, un téléphone ou tout autre appareil électronique comprenant par exemple un microcontrôleur et au moins une mémoire.

La figure 1 comprend un bloc 102 représentant la mémoire. Le bloc 102 peut représenter une unique mémoire ou plusieurs mémoires. La mémoire 102 peut être une ou des mémoires volatiles ou non volatiles, ou plusieurs mémoires, certaines mémoires étant volatiles et d'autres mémoires étant non volatiles. Par exemple, la mémoire 102 comprend de la mémoire de type ROM, de la mémoire de type Flash, de la mémoire de type RAM et éventuellement d'autres types de mémoires.

Le système comprend une unité de protection de la mémoire 104 (MPU - Memory Protection Unit). L'unité de protection de la mémoire fait par exemple partie d'une unité de gestion de la mémoire (MMU - Memory Management Unit). L'unité de protection de la mémoire peut aussi éventuellement remplacer l'unité de gestion de la mémoire. L'unité de protection 104, et éventuellement l'unité de gestion de la mémoire font généralement partie d'une unité de traitement des données (CPU - Central Processing Unit).

L'unité de protection 104 est par exemple un composant matériel. L'unité de protection 104 n'est donc par exemple pas un logiciel. Par logiciel, on entend un ensemble de séquences d'instructions interprétables par un appareil comprenant par exemple un microcontrôleur et d'un jeu de données nécessaires à ces opérations. Le logiciel détermine donc les actions qui peuvent être effectuées par l'appareil.

L'unité de protection 104 permet d'autoriser un logiciel dit à accès privilégié, ou logiciel privilégié, à accéder à des régions dans la mémoire ayant été définies par l'unité de protection. L'unité de protection 104 attribue aussi des niveaux d'autorisation, ou des niveaux de protection, aux différentes régions, c'est-à-dire détermine les actions pouvant être effectuées dans ces régions de la mémoire, et quels logiciels peuvent effectuer ces actions.

Chaque région est définie par une adresse de début et une adresse de fin, ou par une adresse de début et une dimension.

Les logiciels peuvent par exemple avoir deux types de niveaux d'autorisation, c'est-à-dire être de type à accès privilégié (ou logiciel privilégié), ou à accès non privilégié (ou logiciel non privilégié). Chaque région définie par l'unité de protection 104 admet certaines actions pour les logiciels de type privilégié et certaines actions pour les logiciels de type non privilégié.

Par exemple, certaines régions, telles que la région 106 (RW - Read Write), autorisent les logiciels de type privilégié et les logiciels de type non privilégié à lire et à écrire dans cette région de la mémoire.

Par exemple, certaines régions, telles que la région 108 (RO - Read Only) , autorisent les logiciels de type privilégié à lire et à écrire dans cette région de la mémoire et autorisent les logiciels de type non privilégié à lire dans cette région de la mémoire mais pas à écrire. Ainsi, l'accès des logiciels de type non privilégié à la région 108 de la mémoire est restreint.

Eventuellement, les logiciels peuvent être divisés en un plus grand nombre de niveaux d'autorisation. Les logiciels de chaque niveau d'autorisation peuvent effectuer certaines actions sur certaines régions de la mémoire, et ne peuvent éventuellement pas effectuer d'autres actions sur certaines régions de la mémoire. Par exemple, les logiciels peuvent être privilégiés, c'est-à-dire ayant accès à toute la mémoire, ou peuvent être non privilégiés de différentes manières, c'est-à-dire ayant différentes restrictions, différentes autorisations et différents accès.

Le nombre de régions de la mémoire pouvant être définies par l'unité de protection 104 est limité. Par exemple, certaines unités de protection peuvent définir 8 ou 16 régions de mémoire.

De manière à optimiser la protection et la division des régions de la mémoire, certaines régions définies par l'unité de protection 104 peuvent se superposer.

Une région 110 (RO - Read Only) peut être située dans une région 112 (RW - Read Write). La région 112 s'étend par exemple d'une adresse 0xY1 à une adresse 0xY4. La région 110 s'étend par exemple d'une adresse 0xY2 à une adresse 0xY3. L'adresse 0xY4 est située après l'adresse 0xY3. L'adresse 0xY3 est située après l'adresse 0xY2. L'adresse 0xY2 est située après l'adresse 0xY1.

Ainsi, bien que les adresses de la région 110, comprises entre 0xY2 et 0xY3, sont aussi situées dans la région 112, entre 0xY1 et 0xY4, la région 110 a un niveau d'autorisation différent des autres parties de la région 112.

Il n'est cependant pas possible de définir suffisamment de régions dans la mémoire pour que toute la mémoire ait un niveau d'autorisation adéquat pour son utilisation.

De manière à assurer la sécurité de la mémoire et à limiter le nombre de régions, on choisit généralement de définir de larges régions, dans la mémoire, ayant un niveau d'autorisation élevé. Par niveau d'autorisation élevé, on entend par exemple un niveau permettant seulement aux logiciels de type privilégié d'écrire et éventuellement de lire. Il est ainsi possible de protéger une grande partie de la mémoire tout en utilisant un nombre limité de régions. Cependant, les parties de la mémoire auxquelles on souhaite attribuer un niveau d'autorisation élevé ne sont pas toutes situées successivement dans la mémoire. Il est donc possible que des parties de la mémoire auxquelles on souhaiterait attribuer un niveau de protection inférieur, ou plus faible, par exemple des régions dans lesquelles on voudrait autoriser la lecture et l'écriture à tous les logiciels, soient situées dans une région ayant un niveau d'autorisation élevé.

Par exemples, des informations concernant une horloge peuvent par exemple être situées dans la région 108. Des logiciels de type non privilégié peuvent chercher à utiliser, lire ou écrire, ces informations, mais n'y auront pas accès.

En effet, l'unité de protection 104 supervise les actions et les instructions des logiciels essayant d'avoir accès à la mémoire. L'unité de protection 104 détermine, selon le type de logiciel et selon le niveau d'autorisation de la région visée, si le logiciel peut effectuer l'action dans la mémoire.

Si l'unité 104 détermine que le logiciel est autorisé à agir dans la mémoire, le logiciel peut effectuer l'action, par exemple lire ou écrire dans la mémoire. L'action est effectuée par le logiciel requérant l'action, c'est-à-dire le logiciel envoyant l'instruction.

Si l'unité 104 détermine que le logiciel n'est pas autorisé à agir dans la mémoire, le logiciel n'effectue pas l'action. De plus, une exception est générée par l'unité de protection 104.

Cette exception signale une tentative d'accès non autorisée, c'est-à-dire qu'un logiciel a cherché à faire une action pour laquelle le logiciel n'a pas l'autorisation.

La figure 1 comprend un bloc 114 représentant par exemple une autre partie de la mémoire. Le bloc 114 peut aussi représenter plusieurs mémoires. Comme dans le cas du bloc 102, le bloc 114 peut représenter une unique mémoire ou plusieurs mémoires. Le bloc 114 peut être une ou des mémoires volatiles ou non volatiles, ou plusieurs mémoires, certaines mémoires étant volatiles et d'autres mémoires étant non volatiles. Par exemple, le bloc 114 comprend de la mémoire de type ROM, de la mémoire de type Flash, de la mémoire de type RAM et éventuellement d'autres types de mémoire.

Le bloc 114 comprend des logiciels du système 100. Le bloc 114 comprend en particulier un logiciel de sécurité HANDLER, représenté par un bloc 116. Le bloc 114 comprend aussi deux logiciels A et B, représentés respectivement par des blocs 118 et 120. Le bloc 114 comprend d'autres logiciels non représentés.

Le logiciel A est par exemple un logiciel du type privilégié. Le logiciel A a par exemple accès, pour lire et écrire, à toutes les parties de la mémoire. Le logiciel A a par exemple le droit d'écrire et de lire dans les régions 106 RW et dans les régions 108 RO.

Le logiciel B est par exemple un logiciel du type non privilégié. Le logiciel B est donc restreint dans les actions qu'il peut accomplir dans la mémoire. Ainsi, le logiciel B ne peut pas écrire dans les régions 108 RO. Le logiciel B peut cependant lire et écrire dans les régions 106 RW.

Dans le mode de réalisation de la figure 1, le système comprend aussi le logiciel HANDLER. Le logiciel HANDLER est par exemple au moins partiellement situé dans la même mémoire que le logiciel A et/ou le logiciel B.

Le logiciel HANDLER est configuré pour recevoir les exceptions émises lorsqu'une tentative d'accès non autorisée à la mémoire 102 est effectuée. L'exception est par exemple émise par l'unité de protection 104. L'exception peut éventuellement être reçue par un ou plusieurs autres éléments dans l'appareil.

Le logiciel HANDLER est configuré pour pouvoir décrypter l'exception émise lors de la tentative d'accès non autorisé. Plus précisément, le logiciel HANDLER est configuré pour pouvoir obtenir, à partir de l'exception des caractéristiques de la tentative d'accès.

Le logiciel est ainsi configuré pour déterminer au moins certains éléments parmi : l'adresse de la mémoire visée par la tentative d'accès, l'identification du logiciel (par exemple le logiciel A ou B) tentant d'avoir accès à la mémoire 102, l'action que le logiciel cherche à effectuer, le code opérateur de l'action, des variables de l'action, et éventuellement d'autres informations.

Dans un exemple, le logiciel B cherche à effectuer une action "STR R1 [R8]" dans les registres associés à un périphérique. On suppose que la partie de la mémoire 102 contenant les registres est dans une région RO, par exemple la région 108, non accessible par le logiciel B. Le logiciel HANDLER peut alors par exemple déterminer, à partir de l'exception générée :
la partie de la mémoire visée ;
l'identification du logiciel B ;
l'action que le logiciel B cherche à effectuer ;
qu'il s'agit d'une opération d'écriture ;
que l'écriture se fait à, ou vise, l'emplacement de la mémoire dont l'adresse est contenue dans un registre R8 ; et
que la valeur à écrire est la valeur contenue dans le registre R1.

Le logiciel HANDLER est configuré pour comparer ces informations avec un tableau 122 (TABLE) de manière à déterminer si cette action est autorisée.

Le tableau TABLE est contenu dans une mémoire de l'appareil. Le tableau comprend des informations représentatives des actions pouvant être effectuées.

Le tableau 122 comprend par exemple les caractéristiques des actions pouvant être effectuées dans la mémoire 102. Plus précisément, le tableau 122 comprend par exemple les caractéristiques des actions, non autorisées dans les régions par l'unité de protection 104, pouvant néanmoins être effectuées par l'intermédiaire du logiciel HANDLER.

Les caractéristiques du tableau concernent par exemple des actions plus ou moins précises. Par exemple, le tableau peut comprendre des caractéristiques permettant de déterminer qu'il est possible, pour les logiciels non privilégiés, de lire et d'écrire dans une région incluse dans une région telle que la région 108. Le tableau peut aussi permettre de déterminer que ces actions ne sont possibles que pour des logiciels non privilégiés particuliers et non tous les logiciels non privilégiés. Le tableau peut aussi comprendre toutes les caractéristiques d'une action. Par exemple, l'action "STR R0 [R8]" décrite précédemment peut être autorisée, mais l'opération "STR R0 [R9]" peut ne pas l'être. Toutes les caractéristiques de l'action "STR R0 [R8]" sont alors comprises dans le tableau 122 de manière à pouvoir déterminer que cette action est autorisée.

Le tableau n'est de préférence accessible qu'au logiciel HANDLER. Cela est par exemple mis en place de manière matérielle. Le tableau est par exemple contenu dans une mémoire ne contenant que le tableau. La mémoire contenant le tableau est par exemple une mémoire séparée des autres mémoires utilisées dans le fonctionnement de l'appareil. La mémoire contenant le tableau n'est par exemple matériellement accessible que par le logiciel HANDLER.

Le logiciel HANDLER est de plus configuré pour pouvoir accéder à la mémoire 102, de préférence à toute la mémoire, et en particulier pour pouvoir accéder aux régions non accessibles aux logiciels non privilégiés. Le logiciel HANDLER peut donc accéder aux régions de la mémoire 102 dans lesquelles les accès non autorisés ont été tentés.

Le logiciel HANDLER est configuré pour pouvoir effectuer l'action non autorisée ayant déclenché une exception, si le logiciel HANDLER détermine que cette action est autorisée en accord avec le tableau TABLE.

Si une action n'est pas autorisée par l'unité de protection 104 mais est autorisée par les informations contenues dans le tableau TABLE, l'action est effectuée par le logiciel HANDLER et non par le logiciel d'origine dont la tentative d'accès à la mémoire a déclenché l'exception, par exemple le logiciel B. Le logiciel d'origine n'agit donc pas dans les régions auxquelles il n'a pas accès, bien que l'action puisse être effectuée. L'action est donc accomplie par un logiciel (le logiciel HANDLER) ayant un niveau d'autorisation permettant d'accéder à la région de la mémoire en question.

Le contenu du tableau est par exemple programmé lors de la fabrication de l'appareil. Le contenu du tableau est par exemple programmé lors de la mise en place des niveaux d'autorisation et de protection des différentes régions des mémoires. Le contenu du tableau est par exemple écrit par le logiciel HANDLER.

A titre de variante, l'appareil peut comprendre plusieurs logiciels HANDLER. Chaque logiciel HANDLER est par exemple associé à une mémoire. Les logiciels HANDLER sont par exemple chacun associé à un tableau 122. Certains logiciels HANDLER sont par exemple associés à un même tableau 122.

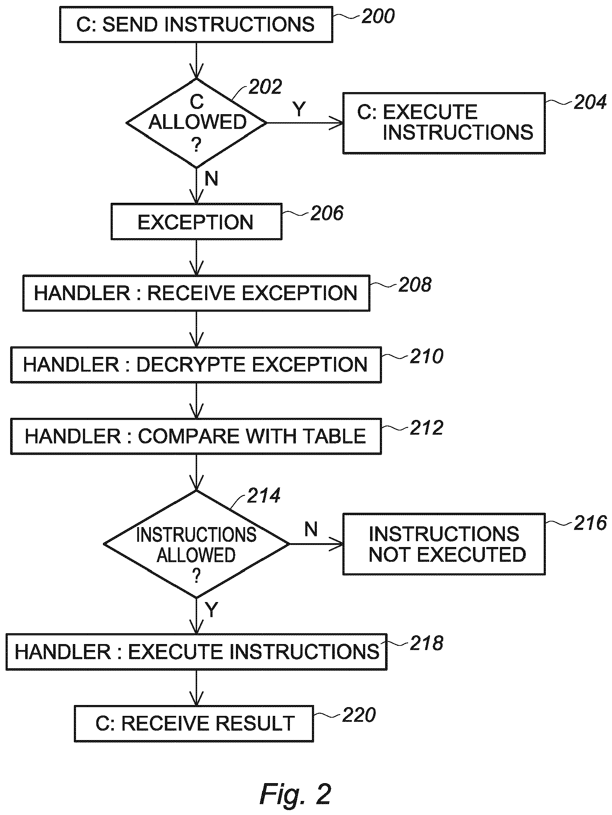

La figure 2 représente un exemple de procédé d'utilisation du mode de réalisation de système de protection de la mémoire de la figure 1.

Au cours d'une première étape 200 (C: SEND INSTRUCTIONS), un logiciel C tente d'accéder à une région d'une mémoire pour y effectuer une action.

Le logiciel C est par exemple un logiciel contenu dans la même mémoire que le logiciel HANDLER et/ou le logiciel A et/ou le logiciel B.

Le logiciel C envoie donc des instructions, c'est-à-dire du code permettant d'implémenter l'action que le logiciel C souhaite effectuer dans la mémoire. Par exemple, le logiciel C cherche à effectuer l'action "STR R0 [R8]" dans les registres associés à un périphérique.

Lorsque le logiciel C tente d'atteindre la mémoire 102, l'unité de protection 104 de la mémoire détermine si cette action est permise. Il s'agit de l'étape 202 (C ALLOWED ?). L'unité de protection de la mémoire détermine donc si le logiciel C a un niveau d'autorisation suffisant pour faire cette action dans cette région de la mémoire.

Si le logiciel C a un niveau d'autorisation suffisant (branche Y), le logiciel C effectue l'action. Il s'agit de l'étape 204 (C : EXECUTE INSTRUCTIONS). Par exemple, le logiciel C est un logiciel privilégié et a accès à toutes les régions de la mémoire. Par exemple, l'action que le logiciel C souhaite effectuer est autorisée dans cette région de la mémoire même pour les logiciels non privilégiés. Par exemple, l'action à effectuer est une action de lecture d'une région RO dans laquelle les logiciels non privilégiés peuvent lire la mémoire. Par exemple, l'action à effectuer est une action d'écriture d'une région RW dans laquelle les logiciels non privilégiés peuvent lire et écrire dans la mémoire.

L'action est alors effectuée par le logiciel C, directement dans la mémoire.

Si le logiciel C n'a pas un niveau d'autorisation suffisant (branche N), une exception est générée. Il s'agit de l'étape 206 (EXCEPTION). Cette exception est par exemple émise par l'unité de protection de la mémoire.

Au cours d'une étape 208 (HANDLER : RECEIVE EXCEPTION), le logiciel HANDLER reçoit l'exception. Au cours de l'étape 210 (HANDLER : DECRYPTE EXCEPTION), le logiciel HANDLER décrypte l'exception de manière à obtenir les caractéristiques de la tentative d'accès non autorisée à la mémoire. Le logiciel HANDLER détermine au moins certains éléments parmi : l'adresse de la mémoire visée par la tentative d'accès, l'identification du logiciel (par exemple le logiciel C) tentant d'avoir accès à la mémoire 102, l'action que le logiciel cherche à effectuer, le code opérateur de l'action, des registres de l'action, et éventuellement d'autres informations.

Au cours d'une étape 212 (HANDLER : COMPARE WITH TABLE), le logiciel HANDLER compare les informations obtenues en décryptant l'exception avec des données contenues dans le tableau TABLE 122.

Le logiciel HANDLER détermine (étape 214, INSTRUCTIONS ALLOWED ?) si l'action peut être effectuée, c'est-à-dire si l'action a été autorisée lors de la programmation du tableau.

Si l'action n'est pas autorisée (branche N), c'est-à-dire si les informations obtenues à partir de l'exception ne correspondent pas aux informations contenues dans le tableau TABLE, l'action n'est pas effectuée (étape 216, INSTRUCTIONS NOT EXECUTED).

Si l'action est autorisée (branche Y), c'est-à-dire si les informations obtenues à partir de l'exception correspondent aux informations contenues dans le tableau TABLE, le logiciel HANDLER effectue l'action (étape 218, HANDLER : EXECUTE INSTRUCTIONS). L'accès à la mémoire pour effectuer l'action, et la modification des registres correspondant à l'action, sont donc faits par le logiciel HANDLER. Le logiciel C n'a donc pas accès aux régions de la mémoire qui ne correspondent pas à son niveau d'autorisation.

Au cours d'une étape 220 (C : RECEIVE RESULT), des informations résultant de l'action effectuée par le logiciel HANDLER peuvent être fournies au logiciel C. Le logiciel C peut par exemple recevoir des informations lues de la mémoire. Le logiciel C continue ensuite son exécution.

De manière plus générale, le logiciel C reçoit les informations lui permettant de continuer son exécution comme s'il avait effectué l'action lui-même. Le logiciel C continue ainsi son fonctionnement.

L'action est donc effectuée par l'intermédiaire d'un logiciel privilégié, le logiciel HANDLER. Les exceptions générées lors de tentatives d'accès par des logiciels non autorisés permettent de prévenir le logiciel HANDLER qu'un logiciel tente une action qui pourrait être faite par son intermédiaire.

Un avantage des modes de réalisation décrits est que des actions provenant de logiciels non privilégiés peuvent être effectuées, y compris dans des régions de la mémoire auxquelles les logiciels non privilégiés n'ont pas directement accès.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus.

## Revendications

1. Système de protection d'une mémoire comprenant un logiciel de sécurité (HANDLER) configuré pour déterminer, à partir d'une exception générée lors d'une tentative d'action non autorisée dans la mémoire (102), si le logiciel de sécurité peut effectuer l'action.

2. Système selon la revendication 1, dans lequel la tentative d'action est effectuée par un autre logiciel (A, B, C).

3. Système selon la revendication 1 ou 2, dans lequel le logiciel de sécurité est configuré pour obtenir des caractéristiques de l'action à partir de l'exception générée.

4. Système selon la revendication 3, dans lequel au moins certaines des caractéristiques obtenues sont comprises parmi : l'adresse de la mémoire visée par la tentative d'action, l'identification du logiciel tentant d'agir dans la mémoire, l'action que l'autre logiciel cherche à effectuer, le code opérateur de l'action, des registres de l'action.

5. Système selon la revendication 3 ou 4, dans lequel le logiciel de sécurité est configuré pour comparer les caractéristiques de l'action obtenues à des informations représentatives des actions pouvant être effectuées dans une mémoire (122).

6. Système selon la revendication 5, dans lequel les informations programmées ne sont accessibles qu'au logiciel de sécurité (HANDLER).

7. Système selon l'une quelconque des revendications 1 à 6, comprenant une unité de protection de la mémoire (104) configurée pour définir des régions dans la mémoire et pour attribuer aux régions des niveaux de protection.

8. Système selon la revendication 7, dans lequel l'exception est générée par l'unité de protection de la mémoire (104).

9. Procédé d'utilisation d'un système de protection d'une mémoire, comprenant les étapes :
générer une exception lors d'une tentative d'action non autorisée dans la mémoire ; et
déterminer, par un logiciel de sécurité, à partir de l'exception, si le logiciel de sécurité est autorisé à effectuer l'action.

10. Procédé selon la revendication 9, comprenant une étape de décryptage de l'exception, de manière à obtenir des caractéristiques de l'action.

11. Procédé selon la revendication 9 ou 10, comprenant une étape au cours de laquelle le logiciel de sécurité effectue l'action.

12. Procédé selon la revendication 11, dans lequel l'autre logiciel continue ensuite son exécution.
